# EUROPEAN PATENT APPLICATION

(11) **EP 2 667 227 A1**
(43) Date of publication of application: **27.11.2013**
(21) Application number: 12736588.0
(22) Date of filing: 16.01.2012
(51) Int. Cl.: G02B 5/128

(54) **MICRO GLASS BEAD RETROREFLECTIVE SHEET IN WHICH IMAGES HAVING VISIBLE DIRECTIVITIES ARE INSTALLED**

(30) Priority: 19.01.2011 JP 2011009316
(71) Applicant: Nippon Carbide Industries Co., Inc., Minato-ku, Tokyo 108-8466 (JP)
(72) Inventor: MIMURA, Ikuo, Uozu-city Toyama 973-0061 (JP); TAKAMATSU, Takeo, Toyama-city Toyama 939-8082 (JP)
(74) Representative: HOFFMANN EITLE
(86) International application number: PCT/JP2012/050690
(87) International publication number: WO 2012/099044

(57) **Abstract**

The present invention provides retroreflective sheeting (100) having at least two types of set images (L1, L2) adjacent to one another each formed as a set of a number of points of image (P1, P2) that are directionally visible in a predetermined direction.

## Description

### Technical Field

The present invention relates to micro glass bead retroreflective sheeting, and particularly relates to micro glass bead retroreflective sheeting excellent in anti-counterfeit performance having an image with directional visibility thereon.

### Background Art

Retroreflective sheeting is excellent in visibility at night, and is therefore preferably used for traffic signs, vehicle registration plates, authentication labels, and retroreflective RFID stickers. As an example of such retroreflective sheering, retroreflective sheeting having an authentication mark for certifying excellent retroreflective performance on a surface thereof for the purpose of ensuring the safety of drivers and pedestrians is known. Such authentication marks need to be difficult to counterfeit.

Some proposals have conventionally been made on such authentication marks provided on retroreflective sheeting.

US Patent No. 4,082,426 (Patent Document 1) teaches reflective sheeting including a monolayer of microsphere-lenses 12 suitable for receiving light incident on the front surface of the sheeting and focusing the incident light, a spacing layer 14 of polymeric material covering the back surfaces of the microsphere-lenses and contoured so as to generally follow those back surfaces, a specularly reflective layer 16 coated over the spacing layer 14, and an image layer 15 disposed in an imagewise pattern between the spacing layer 14 and the specularly reflective layer 16, wherein the image layer 15 is transparent and the thickness of the image layer 15 is greater in the valleys 20 of the spacing layer 14 between the microsphere-lenses 12 than on the curved peaks 19 directly in back of the microsphere-lenses 12, whereby the 45-degree retroreflection from the image areas of the sheeting is at least 30% less than the retroreflection from nonimage areas.

US Patent No. 4,634,220 (Patent Document 2) teaches imaged sheeting including a monolayer of transparent microsphere-lenses, a continuous layer of transparent material covering at least the back surfaces of the microsphere-lenses, and markings on the back surface of the layer of transparent material that are individually viewable at a distance, wherein each individual microsphere-lens is associated with at least one marking within areas in which an image is to be formed, each individual marking is located on an axis that extends through the center of its associated microsphere-lens, and the axes are substantially parallel to one another with respect to a specified image, so that the markings are together viewable as an image when the sheeting is viewed from a certain direction. It is also taught that different images are viewable from two different directions.

US Patent No. 4,645,301 (Patent Document 3) teaches improved substantially transparent sheet containing an authenticating image, which sheet is adapted to be adhesively bonded over information areas of a document without appreciably interfering with the legibility of that information, the sheet containing a monolayer of transparent microlenses, and a transparent spacing layer covering at least the back surfaces of the microlenses, wherein a set of axial specularly reflective markings on the back surface of the transparent layer is viewable as an authenticating image appearing from the front of the sheet only across a conical field of view having a central axis at a certain angle with respect to the sheet, and the authenticating image is retroreflective.

US Patent No. 4,650,283 (Patent Document 4) teaches retroreflective sheeting including a retroreflective layer that includes a monolayer of transparent microspheres partially embedded in a binder layer and a specularly reflective layer covering the back surfaces of the microspheres , wherein the binder layer is light-colored, some of the microspheres have tiny cavities, each opening through a back surface of a microsphere, at least some openings are smaller than the depth of the cavities, the cavities are viewable from the front only across a conical field of view.

US Patent No. 4,688,894 (Patent Document 5) and US Patent No. 4,691,993 (Patent Document 6) teach a substantially transparent sheet including a monolayer of microlenses and a partially light transmissive mirror disposed behind the rear surfaces of at least some of the microlenses such that under retroreflective viewing conditions the sheet is brightly retroreflective in the areas occupied by the mirror, there being an axial marking in the rear portion of or on the rear surface of at least some of the microlenses, which markings together are viewable as an image across a predetermined conical field in ordinary diffuse light conditions.

US Patent No. 4,708,920 (Patent Document 7) teaches a sheet containing an integrated-directional image, the sheet including (a) a monolayer of closely spaced transparent microlenses, (b) a means for supporting the microlenses in the monolayer, and (c) a set of axial markings of substantially equal size, each marking located at the rear of a microlens at a position such that the set of axial markings is visible throughout a selected conical field of view as an integrated-directional, half-tone image having gradations of light and dark areas, wherein individual dots of the half-tone image are at least the same size as the diameter of the microlenses.

US Patent No. 4,714,656 (Patent Document 8) teaches a contour-dependent, directionally imaged sheet including (a) a monolayer of closely spaced transparent microlenses, (b) means for securing the microlenses to the sheet in a monolayer arrangement, and (c) a set of axial markings, each axial marking being located at the rear of a microlens such that the set of axial makings is visible from the front of the sheet as an intact image only when the sheet is in substantially a predetermined nonplanar contour and is viewed within a predetermined conical field of view.

US Patent No. 5,169,707 (Patent Document 9) teaches a substantially transparent laminate including (a) a base sheet including microspheres arranged in substantially a monolayer with partially-light-transmissive reflectors disposed behind the rear surfaces thereof, the microspheres being at least partially embedded in a transparent binder layer, (b) a cover sheet bonded to the front side of the base sheet, and (c) a pattern of image-forming material disposed on the same side of the microspheres as the cover sheet, wherein the pattern is visible as a primary legend under ordinary diffuse light viewing conditions and under retroreflective light viewing conditions, the legend being a substantially directionally variable image under ordinary diffuse light viewing conditions.

US Patent No. 6,288,842 (Patent Document 10) teaches a sheet material including (a) at least one layer of microlenses, the layer having first and second sides, (b) a layer of material disposed adjacent the first side of the layer of microlenses, (c) an at least partially complete image formed in the material associated with each of a plurality of the microlenses, wherein the image contrasts with the material, and (d) a composite image, provided by the individual images, that appears to the unaided eye to be floating above or below the sheeting or both.

Japanese Patent Application Laid-Open No. 2003-211572 (Patent Document 11) teaches a retroreflective article including a first layer including a substantially transparent layer having a flat first surface, and a second layer including a retroreflective element layer having a second surface from which a specularly reflective layer is exposed, on which an image is formed by (A) a step of providing a photoreactive resin layer on the specularly reflective layer of the second surface, (B) a step of causing the photoreactive resin to react partially by selective light irradiation, (C) a step of partially removing a selected area of the photoreactive resin layer, and (D) a step of forming an image by partially removing the specularly reflective layer.

Japanese Patent Application Laid-Open No. 2003-233336 (Patent Document 12) teaches a retroreflective article including a first layer including a substantially transparent layer having a flat first surface, and a second layer including a retroreflective element layer having a second surface from which a specularly reflective layer is exposed, on which an image is formed by (A) a step of providing a photoreactive resin layer on the specularly reflective layer of the second surface, (B) a step of causing the photoreactive resin to react partially by selective light irradiation, (C) a step of partially removing a selected area of the photoreactive resin layer, and (D) a step of forming an image by instantly causing the exposed portions of the specularly reflective layer to be non-specular.

International Publication No. WO2008/023834 (Patent Document 13) teaches a vehicle registration plate having a Retroreflective surface provided with an authentication mark that is recognizable from a predetermined direction, wherein the authentication mark is recognizable from outside a traveling zone of a vehicle.

US Patent Application Publication No. 2008/130126 (Patent Document 14) teaches a user interface including: at least one layer of microlenses, the layer having first and second sides; a layer of material disposed adjacent the first side of the layer of microlenses; and at least partially complete image formed in the material associated with each of a plurality of the microlenses, wherein the image contrasts with the material; a first composite image, provided by the individual images, that appears to the unaided eye to float at a first distance above the sheeting; and a second composite image, provided by the individual images, that appears to the unaided eye to float at a second distance above the sheeting, wherein the first and second distances are approximately the same distance, wherein the first and second composite images are related to the same task.

With the method using ink according to the Patent Document 1, an image is not clear when the material is viewed at an angle of 0° (with respect to the direction perpendicular to the sheeting) and the image can be viewed when the material is viewed with an incident light at 45° over the viewing angle of 360°. There is no teaching as to the difference in the tilt angles.

With the axial markings according to the Patent Documents 2 and 3, an image can be viewed when viewed at an angle of about 8 to 12° with respect to the perpendicular line, and the viewing angle is the ring-like field of view of 360°. With respect to the axial markings according to the Patent Document 2, examples cf the difference between tilt angles of about 64 and 60° are presented. With respect to the axial markings according to the Patent Document 3, an example of the difference between tilt angles of 120° is presented.

With the directional image formed by cavities according to the Patent Document 4, the image can be viewed only across a cone of about 15° from the front. There is no teaching as to the difference in the tilt angles.

With the axial markings according to the Patent Documents 5 and 6, a dark image can be viewed in a conical field of view under the diffuse light or retroreflective conditions, and a bright image can be viewed at an adjacent angle slightly out of the conical field of view. Furthermore, it is also taught that sheeting having two directional images can be formed by forming two sets of markings by irradiating the sheeting with laser beams at a first selected entrance angle in the shape of an image and then irradiating the sheeting with laser beams at a second selected entrance angle in the shape of an image, and each of the markings can be viewed across a conical field of view having the center at the entrance angle of the laser irradiation. Although different angles are mentioned as to the difference in the tilt angles, there is no teaching of specific examples thereof.

With the axial markings according to the Patent Document 7, the axial markings are visible as an integrated-directional photographic image throughout a conical field view having the center at the entrance angle of the laser irradiation. With respect to the axial markings according to the Patent Document 7, an example of the difference between tilt angles of 30° is presented.

With the axial markings according to the Patent Document 8, the axial markings are visible from the front of the sheet as an intact image only when a contour-dependent, directionally imaged sheet is in substantially a predetermined nonplanar contour and are viewed within a predetermined conical field of view.

The retroreflective security laminate with dual level verification according to the Patent Document 9 further includes a first legend provided on an upper layer of the microspheres, and a lacquer located behind the rear surfaces of some microspheres similarly to the Patent Document 1, and is a retro-legend that is transparent under diffuse light conditions and visible under retroreflective light conditions. There is no teaching as to the difference in the tilt angles.

The floating composite image according to the Patent Document 10 can be viewed throughout a cone of about 80 to 90 degrees. There is no teaching as to the difference in the tilt angles.

With the image according to the Patent Document 11, the presence of an image can be clearly recognized at a viewing angle of 45 degrees. There is no teaching as to the difference in the tilt angles.

With the image according to the Patent Document 12, the presence of an image can be clearly recognized at a viewing angle of 45 degrees. There is no teaching as to the difference in the tilt angles.

The authentication marks according to the Patent Document 13 are made recognizable from outside cf a traveling zone of a vehicle by increasing the tilt angle. An example of the difference between tilt angles of about 86° is presented.

The floating composite image according to the Patent Document 14 can be viewed throughout a cone of about 40° or greater. There is no teaching as to the difference in the tilt angles.

### Citation List

### Patent Documents

[Patent Document 1] US Patent No. 4,082,426
[Patent Document 2] US Patent No. 4,634,220
[Patent Document 3] US Patent No. 4,645,301
[Patent Document 4] US Patent No. 4,650,283
[Patent Document 5] US Patent No. 4,688,894
[Patent Document 6] US Patent No. 4,691,993
[Patent Document 7] US Patent No. 4,708,920
[Patent Document 8] US Patent No. 4,714,656
[Patent Document 9] US Patent No. 5,169,707
[Patent Document 10] US Patent No. 6,288,842
[Patent Document 11] Japanese Patent Application Laid-Open No. 2003-211572
[Patent Document 12] Japanese Patent Application Laid-Open No. 2003-233336
[Patent Document 13] International Publication No. WO2008/023834
[Patent Document 14] US Patent Application Publication No. 2008/130126 A1

### Summary of Invention

### Objects to be Achieved by the Invention

Retroreflective sheeting is excellent in visibility at night, and has therefore been preferably used for traffic signs and vehicle registration plates. Such retroreflective sheeting is provided with an authentication mark for certifying excellent retroreflective performance on a surface thereof for the purpose of ensuring the safety of drivers and pedestrians. It is important that such authentication marks are difficult to counterfeit in terms of ensuring the safety and visibility.

An object to be achieved by the present invention is to improve anti-counterfeit performance of images that can be suitably used for authentication marks and images displaying information on retroreflective sheeting.

Another object of the present invention is to provide the viewer with information as pseudo-moving images superior to fixed images.

Still another object of the present invention is to provide retroreflective sheeting having an image with excellent anti-counterfeit performance, and also an image capable of providing the viewer with excellent image information.

Examples of specific applications of retroreflective sheeting according to the present invention include traffic signs, vehicle registration plates, authentication labels, and retroreflective RFID stickers. The retroreflective sheeting may contain an authentication mark, an anti-counterfeit mark, and an image displaying information according to the present invention.

### Means for Achieving the Objects

To achieve the aforementioned objects, retroreflective sheeting according to the present invention is micro glass bead retroreflective sheeting having directionally visible set images including at least two types of set images adjacent to one another each formed as a set of a number of directionally visible points of image that can be viewed in a predetermined direction, wherein a visible region of each point of image contained in the set images has a conical spread, an apex thereof being the point of image, a tilt angle (β) of a central axis of the visible region of each point of image contained in the set images is within a range of 5 to 60 degrees, a difference (Δβ) between the tilt angles of the central axes of the visible regions of points of image contained in the set images adjacent to each other is within a range of 5 to 25 degrees, and azimuths of the tilted central axes of the points of image contained in the respective set images are on the same side with respect to a plane perpendicular to a surface of the retroreflective sheeting and containing a center line passing through the center of the retroreflective sheeting when the central axes are translated to pass through the center of the retroreflective sheeting.

Thus, an image provided on the micro glass bead Retroreflective sheeting that can be used according to the present invention includes set images each formed as a set of a number of directionally visible points of image that can be viewed in a predetermined direction.

The points of image used in the present invention have a size that is not limited as long as a viewer can recognize a set image formed as a set of the points of image, the points of image themselves need not be recognizable, and the size thereof is preferably within a range of 10 to 1,000 µm. The tone of the points of image is preferably such that the points of image have color differences allowing the tone difference from the retroreflective sheeting on which the points of images are provided can be sufficiently recognized, and the color difference (ΔE*) defined by L* a* b* color space as a uniform color space specified by the International Commission on Illumination (CIE) in 1976 is preferably 0.6 or higher, or more preferably 1.5 or higher.

The shape of the points of image is not particularly limited as long as the set images can be recognized, and may be a circle, an ellipse, a square, a rectangle, a parallelogram, a triangle or the like, or may be a combination thereof. Boundaries between an image area and a nonimage area need not be clear, and the tone and the shape of the areas may change gradually.

The provided points of image may reach the viewer's eyes directly, but preferably reach the viewer's eyes in a state magnified or demagnified as necessary by optical elements such as micro glass beads. A wavelength converting layer in which a fluorescent dye is mixed, a light diffusion layer in which an inorganic filler is dispersed, a refractive layer with microprisms or the like may be provided in any of the layers constituting the retroreflective sheeting.

Furthermore, unlike an image that can be recognized in all directions such as a printed image formed according to a common printing technology, points of image contained in set images according to the present invention have visible regions allowing the points of image to be viewed only in specific directions. Thus, the visible region of each point of image contained in set images according to the present invention has a conical spread, an apex thereof being the point of image. Points of image having such visible regions with conical spreads can be provided on micro glass bead retroreflective sheeting by conventionally known laser etching technology or photolithography technology.

Furthermore, the tilt angle (β) of the central axis of the visible region of each point of image contained in the set images is within a range of 5 to 60 degrees. The azimuth (ε) of the tilt can be appropriately determined according to the direction in which a sign board on which the retroreflective sheeting according to the present invention is to be bonded, for example. The tilt angles (β) and the azimuths (ε) are substantially determined according to the direction in which light beams are emitted in laser etching or lithography. Energy beams used in lithography can be appropriately selected from visible light, ultraviolet light, electron beams, and the like. In the present specification, an azimuth (ε) refers to the direction of the central axis of a visible region as viewed along the direction perpendicular to the retroreflective sheeting. In other words, an azimuth (ε) refers to the direction of a straight line obtained by projecting the central axis of a visible region onto the retroreflective sheeting.

Furthermore, in the present invention, the difference (Δβ) between the tilt angles of the central axes of the conical visible regions of points of image contained in the set images adjacent to each other is within a range of 5 to 25 degrees.

A combination of such set images provided so that the difference (Δβ) between the tilt angles of the central axes is within a range of 5 to 25 degrees produces an effect that the combination of adjacent set images appears to the user as a moving image moving in the direction of the set images provided adjacent to each other owing to the afterimage phenomenon when the retroreflective sheeting is viewed in a state rocked along the azimuths of the tilted central axes (hereinafter also referred to as viewing under a rocking motion).

Furthermore, according to measurements on the behavior of the viewer conducted by the inventors of the present technology, it is found that the period with which the viewer rocks the retroreflective sheeting is typically in a range of 0.5 to 2 seconds, and that the angle of the rocking is within 40 degrees at the maximum. The set images combined according to the present invention can produce an effect that the set images appear to the viewer as a moving image owing to the afterimage effect under such typical conditions of rocking motion.

Accordingly, the moving image effect as a result of viewing under the rocking motion according to the present invention provides the viewer with an excellent effect of providing information that cannot be produced by a typical fixed image. Furthermore, the moving image effect provides the retroreflective sheeting having images thereon with an excellent anti-counterfeit effect.

Furthermore, as a result of the feature that the difference (Δβ) between the tilt angles of the central axes of the visible regions of points of image contained in the set images adjacent to each other is within a range of 5 to 25 degrees as described above, the moving image effect can be emphasized. If the difference (Δβ) between the tilt angles of the central axes is larger than 25 degrees, the period of the viewing under the rocking motion becomes longer than the time during which the afterimage effect continues. As a result, adjacent set images are viewed as independent images and the moving image effect is significantly undermined, which is undesirable. If, on the other hand, the difference (Δβ) is smaller than 5 degrees, the problem that the adjacent set images become less distinguishable from each other and the moving effect is undermined is likely to occur.

Although a combination of set images with the difference (Δβ) between the tilt angles of the central axes is known in the conventionally known technology, a combination of set images provided with the difference (Δβ) between the tilt angles of the central axes in a range of 5 to 25 degrees is not known. The conventionally known technology does not therefore produce desirable anti-counterfeit effect and moving image effect.

The tilt angles (β) of the central axes of the visible regions of points of image contained in the set images according to the present invention are within a range of 5 to 60 degrees as described above, preferably 10 to 60 degrees, or more preferably 10 to 45 degrees. Furthermore, the difference (Δβ) between the tilt angles of the central axes of the visible regions of points of image contained in the set images adjacent to each other varies within a range of 5 to 25 degrees. The difference (Δβ) between the tilt angles of the central axes of the visible regions of points of image contained in the set images adjacent to each other is within a range of 5 to 25 degrees.

Note that the tilt angles (β) of the central axes refer to angles between perpendicular lines perpendicular to the retroreflective sheeting drawn from the points of image and the central axes, and include an angle in a case where a central axis is tilted toward one side with respect to the perpendicular line to the retroreflective sheeting and an angle in a case where a central axis is tilted toward the other side as viewed along the direction parallel to the surface of the retroreflective sheeting (in sectional view). Furthermore, the azimuth (ε) of the tilt may be varied within a range of 0 to 360 as appropriate in any direction with respect to the sheeting.

Specifically, when the tilt angle (β1) of the central axis of the visible regions of each point of image contained in one set image is 10 degrees, the difference (Δβ) from the tilt angle (β2) of the central axis of the visible region of each point of image contained in a set image adjacent to the set image is 5 degrees, and the difference (Δε) between the azimuth of each point of image contained in the former set image and the azimuth of each point of image contained in the set image adjacent thereto is 0 degrees, for example, the tilt angle (β2) of the central axis of the visible region of each point of image contained in the adjacent set image is 5 or 15 degrees. Furthermore, when the difference (Δβ) between the tilt angles of the central axes of the visible regions of points of image contained in the set images adjacent to each other is 25 degrees, the tilt angle (β2) of the central axis of the visible region of each point of image contained in the adjacent set image is 35 degrees.

It is preferable to combine an image with β of a positive value and an image with β of a positive value because, when β in one image is within a range of 5 to 35 degrees, β in another image is within a range of 10 to 60 degrees, and Δβ is within a range of 5 to 25 degrees or preferably 8 to 22 degrees, the angle in the other image is not too large for the image to be viewed, and an effect that the combination of adjacent images appears to the viewer as moving like a moving image in the direction of the adjacent set images can be produced owing to the afterimage phenomenon.

If the tilt angles (β) of the central axes of the conical visible regions in the present invention are larger than 60 degrees, the viewer needs to incline the sheeting greatly with respect to the line of sight when viewing the sheeting, and the visibility is undesirably decreased.

Furthermore, in the present invention, the difference (Δε) between an azimuth of each point of image contained in at least one of the set images and an azimuth of each point of image contained in a set image adjacent thereto is preferably within a range of 0 to 10 degrees.

More preferably, the difference (Δε) between the azimuths is within a range of 0 to 7 degrees.

The difference (Δε) between the azimuths of 10 degrees or smaller is preferable because the adjacent set images can be easily distinguished from each other. A combination of set images with such a difference (Δε) between azimuths is not conventionally known.

Furthermore, the visible region of each point of image contained in the set images according to the present invention has a conical spread, an apex thereof being the point of image, and the spread angle (α) of the conical visible region is preferably within a range of 5 to 20.

The spread angle (α) of the conical visible region of 5 degrees or greater is preferable because the visibility of a set image formed as a set of the points of image is excellent. The spread angle (α) of the conical visible region of 20 degrees or smaller is preferable because adjacent set images can be easily distinguished from each other.

Such a spread (α) of the visible region is produced as a result of a spread of a point of image provided on the specularly reflective layer of a micro glass bead retroreflective element due to spherical aberration of the micro glass bead lenses.

Retroreflective sheeting preferable to be provided with the points of image according to the present invention described above may be any of open-lens micro glass bead retroreflective sheeting, enclosed-lens micro glass bead retroreflective sheeting, and encapsulated-lens micro glass bead retroreflective sheeting, or a combination thereof.

The micro glass bead retroreflective element is preferably provided with the specularly reflective layer in any type of retroreflective sheeting. The specularly reflective layer can be typically made of aluminum, silver, nickel, molybdenum, copper or the like alone, a mixture thereof, or a laminate thereof as appropriate.

Furthermore, the points of image according to the present invention are preferably provided on the specularly reflective layer of the micro glass bead retroreflective element.

In addition, the points of image on the specularly reflective layer of the micro glass bead retroreflective element are preferably provided by removing the specularly reflective layer by irradiation with laser beams. Examples of the removal of the specularly reflective layer by lase irradiation include a method of irradiating the surface of the sheeting with laser light at an angle, and a method of removing a metal component forming the specularly reflective layer with laser light directly from the back surface of the sheeting.

In the present invention, the shapes of set images provided adjacent to each other are preferably congruent or similar. A combination of set images having congruent or similar shapes is preferable because the moving image effect that is an object of the present invention can be produced in a significant manner when the sheeting is viewed at different viewing angles. Note that the viewing angle is an angle between an image on the sheeting and the viewer with respect to a perpendicular line from the image on the sheeting when the viewer views the sheeting.

The shapes of the entice set images need not be congruent or similar, but the moving image effect can be produced when parts of the set figures are congruent or similar.

Furthermore, a combination of set images having congruent or similar shapes according to the present invention are preferably arranged in a repeated pattern of the congruent or similar shapes of adjacent set images with a phase difference therebetween.

For example, a combination of sinusoidal patterns including repeated convex arc shapes can be an example of the preferable shapes. A combination of set figures in which such congruent or similar sine curves are arranged in a repeated pattern with a phase difference therebetween produces a moving image effect that a sine wave appears as moving laterally.

More preferably, a combination of set images having congruent or similar shapes according to the present invention are arranged in a repeated pattern of the congruent shapes of adjacent set images with a phase difference therebetween, and furthermore, the phase difference of 1/n (n is 2 to 5) the repetition period produces a more significant moving image effect.

### Effects of the invention

The present invention relates to retroreflective sheeting having thereon a directionally visible image in which set images adjacent to each other having congruent or similar shapes are arranged in a repeated pattern with a phase difference therebetween as an authentication mark or an information displaying mark having improved anti-counterfeit performance. As a result of arranging two or more images having different directional visibility adjacent to each other as described above, a moving image effect that an image appears as moving in a pseudo manner can be produced owing to the afterimage phenomenon when the line of sight of the viewer is slightly changed, which can lead to an excellent anti-counterfeit effect.

### Brief Description of the Drawings

FIG. 1 is a diagram showing directional visibility of a point of image according to a conventional technique.
FIG. 2 is a diagram showing directional visibility of a point of image according to the present invention.
FIGS. 3A and 3B are perspective views showing a Retroreflective sheeting provided with set images each having a visual direction according to an embodiment of the invention.
FIGS. 4A, 4B, and 4S are diagram for explaining the set images on the retroreflective sheeting shown in FIGS. 3A and 3B.
FIG. 5 is a sectional view showing retroreflection by the retroreflective sheeting in FIGS. 3A and 3B.
FIG. 6 is a sectional view showing retroreflection by which the set image shown in FIG. 3A is formed.
FIG. 7 is a sectional view showing retroreflection by which the set image shown in FIG. 3B is formed.
FIGS. 8A, 8B, and 8C are perspective views showing a retroreflective sheeting provided with set images each having a visual direction according to another embodiment of the invention.
FIGS. 9A, 9B, 9C, and 9S are diagram for explaining the set images on the retroreflective sheeting shown in FIGS. 8A, 8B, and 8C.
FIGS. 10A, 10B, 10C, and 10S are diagram showing set images according to still another embodiment of the present invention.
FIGS. 11A, 11B, 11C, and 11S are diagram showing set images according to still another embodiment of the present invention.
FIGS. 12A, 12B, 12C, and 12S are diagram showing set images according to still another embodiment of the present invention.

### Embodiments of the Invention

Preferred embodiments of a retroreflective article according to the present invention will be described in detail below with reference to the drawings.

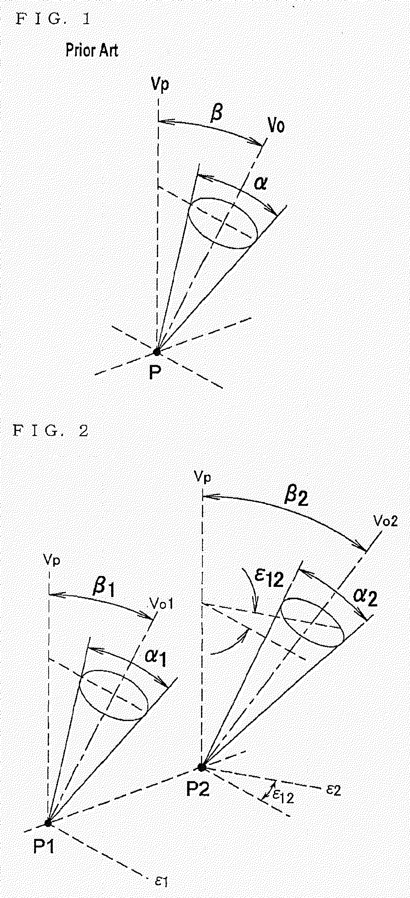

FIG. 1 is a diagram showing directional visibility of a point of image according to a conventional technique.

A central axis (Vo) of a conical visible region of a point of image (P) is tilted at a tilt angle (β) defined as an angle between a line (Vp) perpendicular to a surface of retroreflective sheeting and extending from the point image (P) and the central axis (Vo) of the conical visible region. In addition, the conical visible region has a spread angle (α).

FIG. 2 is a diagram showing directional visibility of a point of image according to the present invention.

Similarly to FIG. 1, central axes (Vo1, Vo2) of conical visible regions of two points of image (P1, P2) are tilted. The tilt angles (β1, β2) of the center axes (Vo1, Vo2) are defined as angles between lines (Vp) perpendicular to a surface of retroreflective sheeting and extending from the points of image (P1, P2) and the central axes (Vo1, Vo2) of the conical visible regions, respectively. In addition, the conical visible regions have spread angles (α1, α2), respectively.

Furthermore, an angle between the azimuth (ε1) and the azimuth (ε2) of the central axes (Vo1, Vo2) of the two points of image (P1, P2), respectively, is represented by ε12 (Δε). This angle (ε12) is equal to that between a plane containing the perpendicular line (Vp) and the axis (Vo1) and a plane containing the perpendicular line (Vp) and the axis (Vo2). In contrast, the central axes of points of image according to the conventional technique have equal azimuth, in which case ε12 is zero.

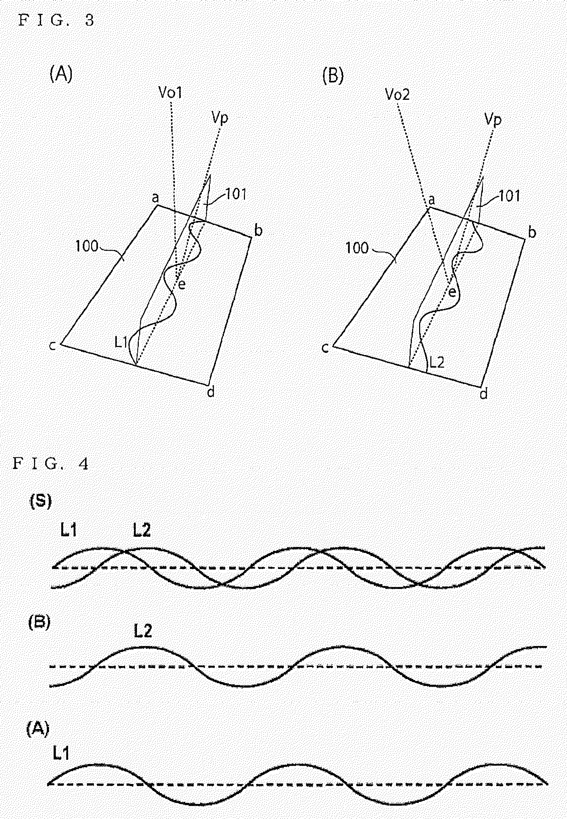

FIGS. 3A and 3B are perspective views showing a retroreflective sheeting provided with set images each having a visual direction according to an embodiment of the invention.

As shown in FIG. 3A, retroreflective sheeting 100 has a sinusoidal set image (L1) formed thereon, in which the azimuth of the tilted central axis (Vo1) of the visible region of a point of image contained in the set image is tilted leftward with respect to a plane perpendicular to the retroreflective sheeting and containing a center line drawn through midpoints of short sides ab and cd of retroreflective sheeting abcd. The point e is the center of the reflective sheeting. The center line of the retroreflective sheeting is a line connecting midpoints of short sides thereof when the retroreflective sheeting is regarded as a rectangle.

Furthermore, as shown in FIG. 3B, the retroreflective sheeting 100 also has a sinusoidal set image (L2) formed thereon adjacent to the set image (L1), in which the azimuth of the tilted central axis (Vo2) of the visible region of a point of image contained in the set image (L2) is tilted greatly leftward in the drawing with respect to the line (Vp) perpendicular to the retroreflective sheeting. Thus, the central axis (Vo1) and the central axis (Vc2) are tilted leftward with respect to the plane perpendicular to the retroreflective sheeting and containing the center line drawn through the midpoints of the short sides ab and cd of the retroreflective sheeting abcd.

Furthermore, the tilt angles of the central axes of the visible regions of the points of image in the set images (L1, L2) are within a range from 5 to 60 degrees with respect to the perpendicular lines (Vp), and a difference (Δβ) between the tilt angles of the central axes of the visible regions of the respective points of image in adjacent set images (L1, L2) is within a range of 5 to 25 degrees. The set image (L2) has the same shape as the set image (L1) with a phase difference of one-fourth the period of the sinusoidal wave.

FIGS. 4A, 4B, and 4S are diagram for explaining the set images (L1, L2) on the retroreflective sheeting shown in FIGS. 3A and 3B.

FIG. 4(A) is a plan view of the sinusoidal set image (L1) shown in FIG. 3A, and FIG. 4(B) is a plan view of the sinusoidal set image (L2) shown in FIG. 3B.

Furthermore, FIG. 4(S) is a plan view in which the set image (L1) and the set image (L2) are formed in a manner that one is superposed on the other.

When the visible regions of the points of image (P1 and P2) contained in the two set images (L1, L2), respectively, adjacent to each other are not in contact with and do not overlap with each other, the two set images (L1, L2) are not viewed at the same time at a viewing angle but the set images (L1, L2) are viewed alternately under a rocking motion. As a result, a sinusoidal image can be seen as moving laterally owing to the afterimage effect. However, as the distance between the visible regions of the points of image (P1, P2) is larger, the afterimage effect tends not to be produced unless the speed of the rocking motion is increased. Furthermore, the afterimage effect varies from individual to individual. In order that an image is made to be viewed as smoothly moving regardless of the rocking speed and the individual differences, it is therefore preferable that parts of the visible regions of the points of image (P1, P2) contained in the adjacent set images (L1, L2), respectively, be in contact with or overlap with each other.

Next, the principle of the difference between the central axis (Vo1) of the visible region of the set image (L1) and the central axis (Vo2) of the visible region of the set image (L2) in this manner will be described.

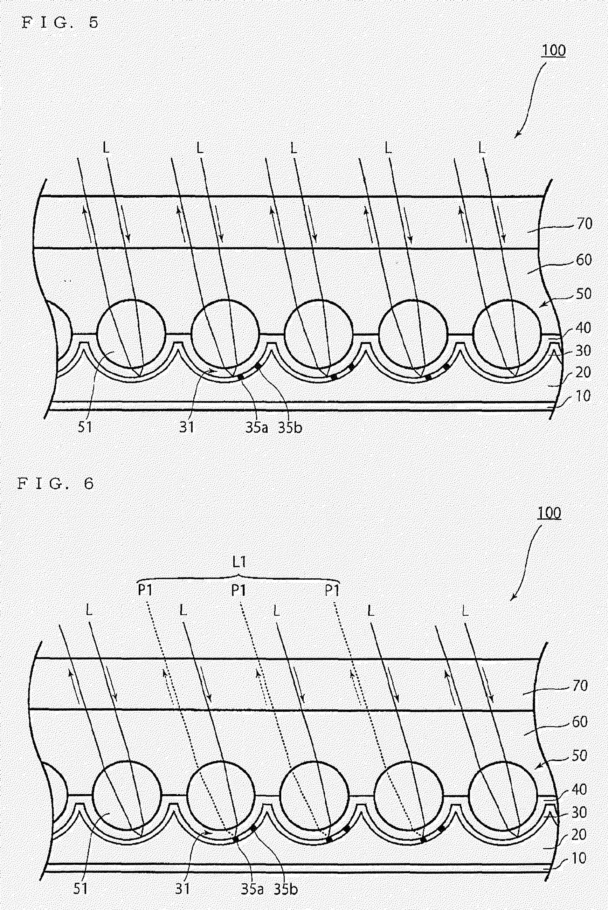

FIG. 5 is a sectional view showing retroreflection by the retroreflective sheeting in FIGS. 3A and 3B. Specifically, FIG. 5 is a sectional view of an area where the set image (L1) and the set image (L2) shown in FIG. 3 intersect with each other. Note that the retroreflective sheeting 100 according to the present invention is not limited to that shown in FIG. 5, but may be any of open-lens micro glass bead retroreflective sheeting, enclosed-lens micro glass bead retroreflective sheeting, and encapsulated-lens micro glass bead retroreflective sheeting, or a combination thereof as described above.

As illustrated in FIG. 5, the retroreflective sheeting 100 incudes a surface protective layer 70, a holding layer 60 on one surface of the surface protective layer 7C, a microlens layer 50 having a plurality of microlenses 51 held by a surface of the holding layer 60 opposite to that on the side of the surface protective layer 70, a specularly reflective layer 30 provided on a side of the holding layer 60 opposite to the side of the microlens layer 50, a focusing layer 40 provided between the microlenses 51 and the specularly reflective layer 30, an adhesive layer 20 provided on a surface of the specularly reflective layer 30 opposite to that on the side of the microlens layer 50, a protective sheet 10 for protecting the adhesive layer. A printed layer on which a predetermined pattern is printed may be provided as necessary between the surface protective layer 70 and the holding layer or the like.

The surface protective layer 70 is made of a light transmissive flat resin film.

The holding layer 60 is light transmissive, and the microlenses 51 are embedded thereinto up to substantially the centers of the microlenses 51 on the side of the holding layer 60 opposite to the surface protective layer 70.

The microlenses 51 of the microlens layer 50 are embedded into the holding layer 60 up to substantially the centers thereof as described above, and half of the surface of each microlens 51 is thus covered with the holding layer 60. The portion of each microlens 51 that is not covered with the holding layer 60 is covered with the focusing layer 40.

The specularly reflective layer 30 is provided on the surface of the focusing layer 40. In addition, the surface of the specularly reflective layer 30 on the side of the microlenses 51 and the surfaces of the respective microlenses 51 are opposed to each other with the focusing layer 40 therebetween and with a certain distance therebetween to form reflective areas 31.

A reflective area 31 of the specularly reflective layer 30 at a position where the set image (L1) is formed has a dot-like gap 35a formed in one side thereof with respect to the center of a microlens 51 opposed thereto. The gap 35a is formed at the same position in each reflective area 31 opposed to a microlens 51 at a position where the set image (L1) is formed. Similarly, a reflective area 31 of the specularly reflective layer 30 at a position where the set image (L2) is formed has a dot-like gap 35b formed in the same side as the side where the gap 35a is formed with respect to the center of a microlens 51 opposed thereto. The gap 35b is formed at a longer distance from the center of a microlens 51 opposed thereto than the gap 35a.

Since FIG. 5 is a sectional view at an area where the set image (L1) and the set image (L2) intersect with each other as described above, the dot-like gaps 35a, 35b are formed in the reflective areas 31 opposed to the same microlenses 51. Furthermore, in FIG. 5, reflective regions 31 at positions where the set image (L1) and the set image (L2) are formed and reflective regions 31 where no images are formed and no gaps 35a, 35b are formed are shown.

The adhesive layer 20 provided on the specularly reflective layer 30 on the side opposite to the microlens layer 50 is provided so as to bond the retroreflective sheeting 100 to another object that is not shown. The protective sheet 10 protects the adhesive layer 20 until the retroreflective sheeting 100 is bonded to another object.

Materials of the members constituting the retroreflective sheeting 100 will be described.

The surface protective layer 70 is made of vinyl chloride resin. The holding layer 60 is made of acrylic resin. The microlenses 51 are made of glass. The focusing layer 40 is made of acrylic resin. The specularly reflective layer 30 is made of evaporated aluminum. The adhesive layer 20 is made of acrylic resin.

Next, the manner in which the set image (L1) and the set image (L2) are formed on the retroreflective sheeting 100 will be described.

As illustrated in FIG. 5, light L is incident on the surface protective layer 70 of the retroreflective sheeting 100 in a direction tilted at a certain angle with respect to the direction perpendicular to the surface of the retroreflective sheeting 100. The light L incident on the retroreflective sheeting 100 is then refracted by the surfaces of the microlenses 51 and emitted from the microlenses 51. The light L emitted from the microlenses 51 is focused on the respective reflective areas 31 of the specularly reflective layer 30. The focused light is reflected by the reflective areas 31 and enters the microlenses 51 again. The light L is then refracted by the surfaces of the microlenses 51 and emitted therefrom. In this process, the light L is emitted in the direction tilted at the same angle as that when entering the retroreflective sheeting 100 with respect to the direction perpendicular to the surface of the retroreflective sheeting 100. Accordingly, the retroreflective sheeting 100 reflects light output from the light source toward the light source. In this process, the light focused on the respective reflective areas 31 having the gaps 35a, 35b formed therein of the specularly reflective layer 30 is also reflected unless the light is focused on the gaps 35a or the gaps 35b as shown in FIG. 5. Thus, the viewer viewing the retroreflective sheeting 100 in the same direction as the light L cannot recognize the set images (L1, L2).

FIG. 6 is a sectional view showing retroreflection by which the set image shown in FIG. 3A is formed. As shown in FIG. 6, light rays incident on the microlenses 51 that form the set image (L1) among rays of light L incident on the retroreflective sheeting 100 along the central axis (Vo1), that is, light L incident at a tilt angle (β1) with respect to the line (Vp) perpendicular to the surface of the retroreflective sheeting 100 are focused on the dot-like gaps 35a in the reflective areas 31 and are not reflected when the light rays are focused on the surfaces of the reflective areas 31 of the specularly reflective layer 30. Accordingly, as shown by broken lines in FIG. 6, when light L is incident in the direction tilted at the tilt angle (β1) with respect to the line (Vp) perpendicular to the surface of the retroreflective sheeting 100, retroreflected light is missing at positions where the set image (L1) is formed, which results in points of image (P1) constituting the set image (L1). On the other hand, at positions where the set image (L1) is not formed, light L incident on the microlenses 51 is reflected by the specularly reflective layer 30 and emitted in the direction tilted at the tilt angle (β1) with respect to the line (Vp) perpendicular to the surface of the retroreflective sheeting 100, that is, in the direction along the central axis (Vo1). As a result, the viewer viewing the retroreflective sheeting 100 along the central axis (Vo1) can recognize the set image (L1) that is relatively darker on the specularly reflective layer 30.

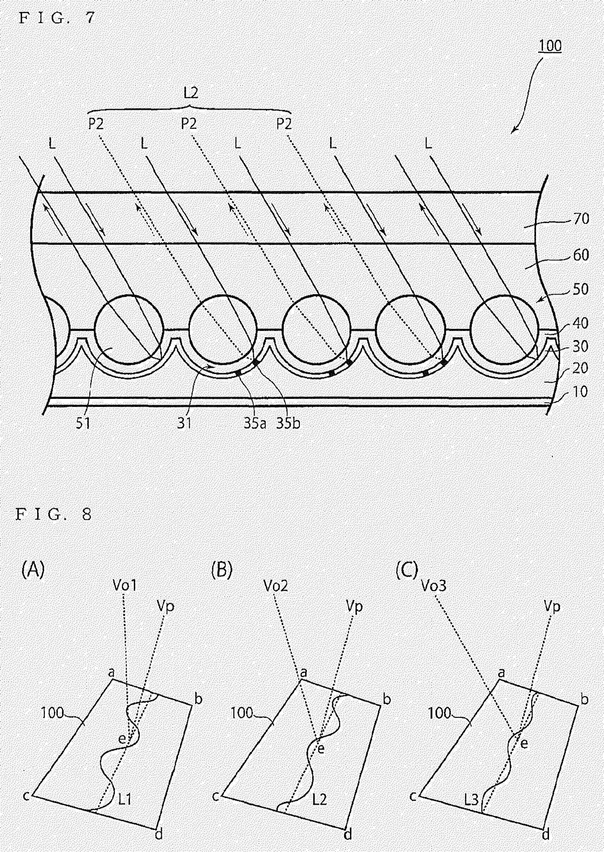

FIG. 7 is a sectional view showing retroreflection by which the set image shown in FIG. 3B is formed. As shown in FIG. 7, light rays incident on the microlenses 51 that form the set image (L2) among rays of light L incident on the retroreflective sheeting 100 along the central axis (Vo2), that is, light L incident at a tilt angle (β2) with respect to the line (Vp) perpendicular to the surface of the retroreflective sheeting 100 are focused on the dot-like gaps 35b in the reflective areas 31 and are not reflected when the light rays are focused on the surfaces of the reflective areas 31 of the specularly reflective layer 30. Accordingly, as shown by broken lines in FIG. 7, when light L is incident in the direction tilted at the tilt angle (β2) with respect to the line (Vp) perpendicular to the surface of the retroreflective sheeting 100, retroreflected light is missing at positions where the set image (L2) is formed, which results in points of image (P2) constituting the set image (L2). On the other hand, at positions where the set image (L2) is not formed, light L incident on the microlenses 51 is reflected by the specularly reflective layer 30 and emitted in the direction tilted at the tilt angle (β2) with respect to the line (Vp) perpendicular to the surface of the retroreflective sheeting 100, that is, in the direction along the central axis (Vo2). As a result, the viewer viewing the retroreflective sheeting 100 along the central axis (Vo2) can recognize the set image (L2) that is relatively darker on the specularly reflective layer 31.

Note that the spread angles (α1, α2) of the conical visible regions can be changed as necessary by changing the sizes of the dot-like gaps 35a, 35b.

Next, another embodiment of the present invention will be described. FIGS. 8A, 8B, and 8C are perspective views showing a retroreflective sheeting provided with set images each having a visual direction according to another embodiment of the invention. As shown in FIG. 8(A), retroreflective sheeting 100 has a sinusoidal set image (L1) formed thereon, in which the azimuth of the tilted central axis (Vo1) of the visible region of a point of image contained in the set image is tilted leftward in the drawing with respect to a line (Vp) perpendicular to the retroreflective sheeting.

Furthermore, as shown in FIG. 8(B), the retroreflective sheeting 100 also has a sinusoidal set image (L2) formed thereon adjacent to the set image (L1), in which the azimuth of the tilted central axis (Vo2) of the visible region of a point of image contained in the set image (L2) is tilted greatly leftward in the drawing with respect to the line (Vp) perpendicular to the retroreflective sheeting similarly to the central axis (Vo1), and the tilt angle is greater than that of the central axis (Vo1). The set image (L2) has the same shape as the set image (L1) with a phase difference of one-sixth the period of the sinusoidal wave.

Furthermore, as shown in FIG. 8(B), retroreflective sheeting 100 also has a sinusoidal set image (L3) formed thereon, in which the azimuth of a tilted central axis (Vo3) of the visible region of a point of image contained in the set image (L3) is tilted leftward in the drawing with respect to a line (Vp) perpendicular to the retroreflective sheeting 100 similarly to the central axes (Vo1, Vc2), and the central line (Vo1) and the central line (Vo3) are in opposite directions with respect to the perpendicular line (Vp).. The tilt angle of the central axes (Vo1, Vo3) is greater than that of the central axes (Vo2). The set image (L3) has the same shape as the set image (L1) with a phase difference of two-sixth the period of the sinusoidal wave.

Furthermore, the tilt angles of the central axes of the visible regions of the points of image in the set images (L1, L2, L3) are within a range from 5 to 60 degrees with respect to the perpendicular lines (Vp), and differences (Δβ) between the tilt angles of the central axes of the visible regions of the respective points of image in adjacent set images (L1, L2, L3) are within a range of 5 to 25 degrees.

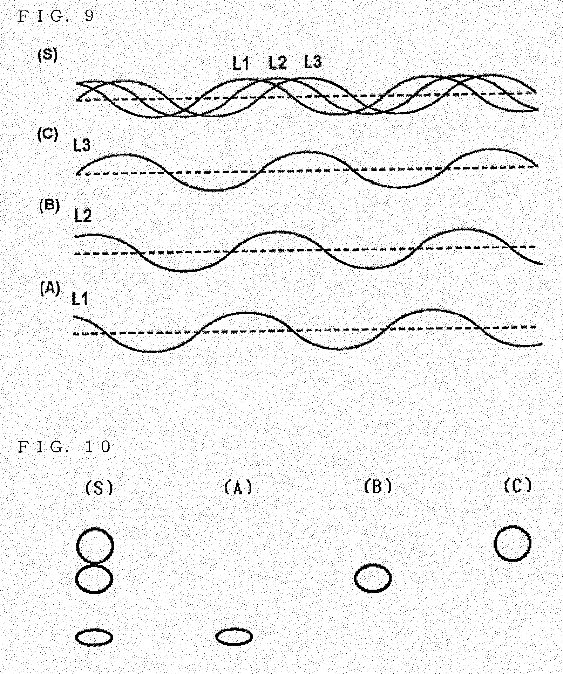

FIGS. 9A, 9B, 9C, and 9S are diagram for explaining the set images on the retroreflective sheeting shown in FIGS. 8A, 8B, and 8C.

FIG. 9(A) is a plan view of the sinusoidal set image (L1) shown in FIG. 8 (A), FIG. 9(B) is a plan view of the sinusoidal set image (L2) shown in FIG. 8(B), and FIG. 9(C) is a plan view of the sinusoidal set image (L3) shown in FIG. 8(C).

FIG. 9(S) is a plan view in which the three set images (L1, L2, L3) are formed in a manner that one is superposed on another. Such three set images (L1, L2, L3) can be viewed as moving laterally owing to the afterimage effect when viewed under a rocking motion.

FIGS. 10A, 10B, 10C, and 10S are diagram showing set images according to still another embodiment of the present invention.

FIGS. 10A, 10B, and 10C are a combination of elliptical set images that can be observed from different view angles. The set images shown in FIGS. 10A, 10B, and 10C are arranged in a vertical direction in FIGS. 10A, 10B, and 10C. These set images may have the same or homologous shapes.

In FIG. 10, the tilt angles of the central axes of the viewable regions of points of image in the set images (A), (B), and (C) are within a range from 5 to 60 degrees with respect to the line perpendicular to the retroreflective sheeting, and differences (Δβ) between the tilt angles of the central axes of the visible regions of the respective points of image in adjacent set images (A), (B), and (C) are within a range of 5 to 25 degrees, or preferably 8 to 22 degrees. Such three types of set images are provided in combination. When the visible regions of the respective points of image contained in adjacent set images are not in contact with and do not overlap with each other, only one type of set image is viewable but the other set images cannot be viewed at a fixed viewing angle. In contrast, when the retroreflective sheeting is rocked along the azimuths of the tilted central axes and viewed under the rocking motion, the combination of the three set images can be viewed as moving vertically owing to the afterimage phenomenon. When the visible regions of points of image contained in adjacent set images are in contact with or overlap with each other, two types of set images may be viewed but three types of set images cannot be viewed at a fixed viewing angle. In contrast, when the retroreflective sheeting is rocked along the azimuths of the tilted central axes and viewed under the rocking motion, the combination of the set images can be viewed as smoothly moving vertically regardless of the difference in the rocking speed and the individual differences. The viewer will view an image like a ball bouncing vertically.

Since retroreflective sheeting having a combination of meaningless set images can produce a moving image phenomenon when viewed under a rocking motion under specific conditions, the retroreflective sheeting can have a preferable anti-counterfeit effect.

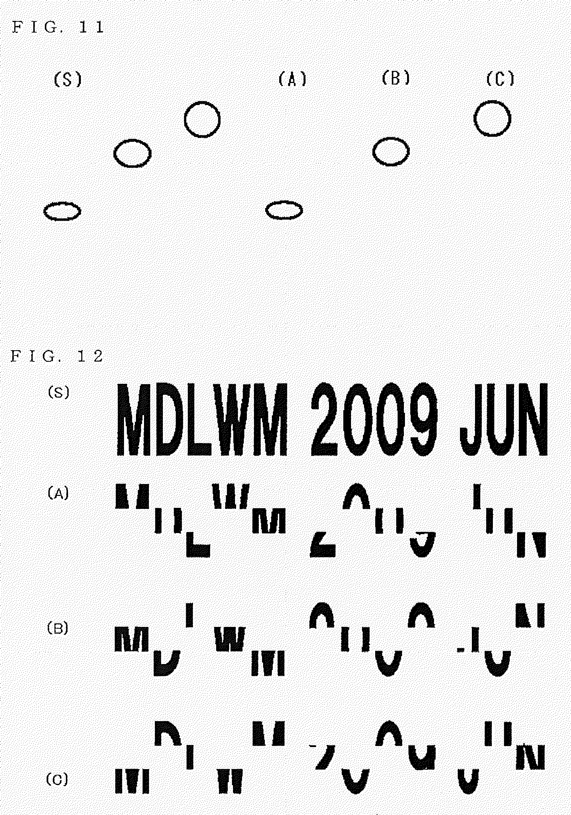

FIGS. 11A, 11B, 11C, and 11S are diagram showing set images according to still another embodiment of the present invention.

FIGS. 11A, 11B, and 11C are a combination of elliptical set images that can be observed from different view angles. The set images shown in FIGS. 11A, 11B, and 11C are arranged in an oblique direction in FIGS. 11A, 11B, and 11C with phase differences. These set images may have the same or homologous shapes.

In FIG. 11, the tilt angles of the central axes of the viewable regions of points of image in the set images (A), (B), and (C) are within a range from 5 to 60 degrees with respect to the line perpendicular to the retroreflective sheeting, and differences (Δβ) between the tilt angles of the central axes of the visible regions of the respective points of image in adjacent set images (A), (B), and (C) are within a range of 5 to 25 degrees, or preferably 8 to 22 degrees. Such three types of set images are provided in combination. When the visible regions of the respective points of image contained in adjacent set images are not in contact with and do not overlap with each other, only one type of set image is viewable but the other set images cannot be viewed at a fixed viewing angle. In contrast, when the retroreflective sheeting is rocked along the azimuths of the tilted central axes and viewed under the rocking motion, the combination of the three set images can be viewed as moving vertically and laterally owing to the afterimage phenomenon. When the visible regions of points of image contained in adjacent set images a=e in contact with or overlap with each other, two types of set images may be viewed but three types of set images cannot be viewed at a fixed viewing angle. In ccntrast, when the retroreflective sheeting is rocked along the azimuths of the tilted central axes and viewed under the rocking motion, the combination of the set images can be viewed as smoothly moving vertically and laterally regardless of the difference in the rocking speed and the individual differences. The viewer will view an image like a ball bouncing laterally.

Since retroreflective sheeting having a combination of meaningless set images can produce a moving image phenomenon when viewed under a rocking motion under specific conditions, the retroreflective sheeting can have a preferable anti-counterfeit effect similarly to the embodiment of FIG. 10.

FIGS. 12A, 12B, 12C, and 12S are diagram showing set images according to still another embodiment of the present invention.

In FIG. 12, the tilt angles of the central axes of the viewable regions of points of image in the set images (A), (B), and (C) are within a range from 5 to 60 degrees with respect to the line perpendicular to the retroreflective sheeting, and differences (Δβ) between the tilt angles of the central axes of the visible regions of the respective points of image in adjacent set images (A), (B), and (C) are within a range of 5 to 25 degrees, or preferably 8 to 22 degrees. Such three types of set images are provided in combination. When the visible regions of the respective points of image contained in adjacent set images are not in contact with and do not overlap with each other, only one type of set image is viewable but the other set images cannot be viewed at a fixed viewing angle. In contrast, when the retroreflective sheeting is rocked along the azimuths of the tilted central axes and viewed under the rocking motion, the combination of the three set images can be viewed as a meaningful image (S) different from each set image alone as a result of the combination with adjacent set images. When the visible regions of points of image contained in adjacent set images are in contact with or overlap with each other, two types of set images may be viewed but three types of set images cannot be viewed at a fixed viewing angle. In contrast, when the retroreflective sheeting is rocked along the azimuths of the tilted central axes and viewed under the rocking motion, the combination of the set images can be viewed as a meaningful image (S) different from each set image alone as a result of the combination with adjacent set images regardless of the difference in the rocking speed and the individual differences.

Since retroreflective sheeting having a combination of meaningless set images can produce meaningful information when viewed under a rocking motion under specific conditions, the retroreflective sheeting can have a preferable anti-counterfeit effect.

### Industrial Applicability

Examples of specific applications of retroreflective sheeting according to the present invention include traffic signs, construction signs, commercial signs, vehicle registration plates, retroreflective stickers, and retroreflective RFID stickers, and the retroreflective sheeting may be used as retroreflective sheeting with excellent anti-counterfeit performance and information providing performance.

The invention provides retroreflective sheeting excellent in anti-counterfeit performance having an image with directional visibility thereon that can be used for signs and labels to which retroreflective sheeting having an image with anti-counterfeit performance thereon is bonded.

Furthermore, signs or labels to which the retroreflective sheeting according to the present invention is bonded can be used as authentication marks difficult tc counterfeit.

### Description cf Reference Numerals

- 10: protective sheet
- 20: adhesive layer
- 30: specularly reflective layer
- 31: reflective area
- 35a, 35b: gap
- 40: focusing layer
- 50: microlens layer
- 51: microlens
- 60: holding layer
- 70: surface protective layer
- 100: retroreflective sheeting
- P, P1, P2: point of image
- Vp: perpendicular line
- Vo: central axis
- Vo1, Vo2, Vo3: central axis
- L: light
- L1, L2, L3: set image

## Claims

1. Micro glass bead retroreflective sheeting having directionally visible set images including at least two types of set images adjacent to one another each formed as a set of a number of directionally visible points of image that can be viewed in a predetermined direction, wherein
a visible region of each point of image contained in the set images has a conical spread, an apex thereof being the point of image,
a tilt angle (β) of a central axis of the visible region of each point of image contained in the set images is within a range of 5 to 60 degrees,
a difference (Δβ) between the tilt angles of the central axes of the visible regions of points of image contained in the set images adjacent to each other is within a range of 5 to 25 degrees, and
azimuths of the tilted central axes of the points of image contained in the respective set images are on the same side with respect to a plane perpendicular to a surface of the Retroreflective sheeting and containing a center line passing through the center of the retroreflective sheeting when the central axes are translated to pass through the center of the retroreflective sheeting.

2. The micro glass bead retroreflective sheeting having directionally visible set images according to claim 1, wherein the difference (Δβ) between the tilt angles of the central axes of the visible regions of points of image cortained in the set images adjacent to each other is within a range of 8 to 22 degrees.

3. The micro glass bead retroreflective sheeting having directionally visible set images according to claim 1 or 2, wherein the tilt angles (β) of the central axes of the visible regions are within a range of 10 to 60 degrees

4. The micro glass bead retroreflective sheeting having directionally visible set images according to any one of claims 1 to 3, wherein a difference (Δε) between an azimuth of each point of image contained in at least one of the set images and an azimuth of each point of image contained in a set image adjacent thereto is within a range of 0 to 10 degrees.

5. The micro glass bead retroreflective sheeting having directionally visible set images according to claim 4, wherein the difference (Δε) between the azimuth of each point of image contained in at least one of the set images and the azimuth of each point of image contained in a set image adjacent thereto is within a range of 0 to 7 degrees.

6. The micro glass bead retroreflective sheeting having directionally visible set images according to any one of claims 1 to 5, wherein a spread angle (α) of the conical visible region of each point of image contained in the set images is within a range of 5 to 20.

7. The micro glass bead retroreflective sheeting having directionally visible set images according to any one of claims 1 to 6, wherein parts of the visible regions of points of image contained in the set images adjacent to each other are in contact with or overlap with each other.

8. The micro glass bead retroreflective sheeting having directionally visible set images according to any one of claims 1 to 7, wherein the micro glass bead retroreflective sheeting is any of open-lens micro glass bead retroreflective sheeting, enclosed-lens micro glass bead retroreflective sheeting, and encapsulated-lens micro glass bead retroreflective sheeting.

9. Micro glass bead retroreflective sheeting having directionally visible set images including at least two types of set images adjacent to one another each formed as a set of a number of directionally visible points of image that can be viewed in a predetermined direction, wherein
a visible region of each point of image contained in the set images has a conical spread, an apex thereof being the point of image, and parts of the visible regions of points of image contained in the set images adjacent to each other are in contact with or overlap with each other.
